# EUROPÄISCHE PATENTSCHRIFT

(11) **EP 0 818 137 B1**
(45) Veröffentlichungstag und Bekanntmachung des Hinweises auf die Patenterteilung: **03.04.2002**
(21) Anmeldenummer: 97111507.6
(22) Anmeldetag: 08.07.1997
(51) Int. Cl.: A01F 25/00, A01F 25/20

(54) **Fahrsiloentnahmegerät**
Silage unloader-cutter for trenchsilo
Dispositif pour couper et enlever de l'ensilage dans un silo couloir

(30) Priorität: 08.07.1996 AT 40396 U; 30.12.1996 DE 19654725
(43) Veröffentlichungstag der Anmeldung: 14.01.1998
(73) Patentinhaber: Altenbuchner, Josef, 5122 Hochburg-Ach (AT)
(72) Erfinder: Altenbuchner, Josef, 5122 Hochburg-Ach (AT)
(74) Vertreter: Dupal, Helmut, Dipl.-Ing.

(56) Entgegenhaltungen:
- DE-A- 19 546 166
- DE-U- 29 520 250
- FR-A- 2 737 386

## Beschreibung

Die Erfindung bezieht sich auf ein Fahrsiloentnahmegerät angebaut an einen Transport- und/oder Mischbehälter, insbesonders an einen Transport- oder Mischwagen oder dergleichen mit den Merkmalen des Oberbegriffes des Anspruches 1.

Siloentnahmegeräte dieser Bauart, als Silokamm entweder mit einem Schneidschild mit Reißzähnen oder mit einer Schneidvorrichtung zum Abtrennen der Silage vom Futterstock eines Fahrsilos, werden wegen ihrer einfachen Bauart sehr häufig angewandt. Sie zerkleinern das Futter bereits teilweise, wodurch die Futtervorlage vereinfacht ist.

Solche Geräte werden auch an gezogene Transportwagen angebaut oder als selbstfahrende Maschinen verwendet. Vor allem bei Futtermischwagen bei denen die Silage mit anderen Zuschlagstoffen vermengt wird, wird durch die Vorzerkleinerung der Silage der Mischvorgang bedeutend erleichtert.

Aus dem DE 295 20 250 U1 ist ein Fahrsiloentnahmegerät bekannt, bei dem ein ein Trennschild mit Reißzähnen zum abtrennen von Silagegut aus dem Futterstock vorgesehen ist, der an einer Schwinge um eine waagrechte Achse vor und zurück mit einem hydraulischen Kraftzylinder, zwischen diesen beiden beweglichen Teilen angeordnet, verschwenkbar ist. Die schwinge ist um eine waagrechte Achse an einem Geräterahmen höhenverschwenkbar mit einem zwischen diesen angeordneten weiteren hydraulischen Kraftzylinder bewegbar, wodurch der Trennschild über die Scheitelhöhe des Futterstockes gehoben werden kann. Der Trennschild ist an seinem unteren Ende mit einer hydraulisch betätigbaren Abstreifvorrichtung versehen und streift das abgetrennte Silagegut in einen im Rahmen angebrachten Laderaum. Die Steuerung der hydraulischen Einrichtungen erfolgt von Hand über Steuerventile draulisch.

Nachteilig bei den bestehenden Geräten ist aber, daß die Steuerung der hydraulischen Stellzylinder für den Hubarm und den Schneidschild des Silokammes von Hand aus erfolgen muß, so daß erhebliche Erfahrung und ständige, große Aufmerksamkeit während der Bedienung notwendig sind, vor allem wenn eine gleichmäßige Zerteilung der Silage erwünscht ist.

Überdies soll der Futterstock des Fahrsilos möglichst gleichmäßig in einem glatten Schnitt abgetragen werden, wobei eine, etwa lotrechte Anschnittwand am günstigsten ist.

Beim Abtrennen der Silage ist es zur besseren Zerteilung notwendig, eine bestimmte Abtragedicke nicht zu überschreiten und die Abschnittiefe zu begrenzen, weil ansonsten zu große Stücke abgetrennt bzw. abgerissen werden oder der Schneidschild sich festklemmt, wodurch beim Lösen das Gerät einer besonders großen Belastung ausgesetzt ist.

Aufgabe der Erfindung ist es, die beschriebenen Nachteile zu vermeiden und die Arbeitsvorgänge durch Anwendung geeigneter Mittel zu erleichtern und möglichst selbsttätig zu gestalten, so daß die Bedienungsperson lediglich die Einstellung der Grundstellung des Silokammes und der Ausgangsposition zum Abtragen, sowie den Abtransport und das Entleeren vorzunehmen und bei der Anfährt zum Futterstock steuernd einzugreifen hat.

Diese Aufgabe wird bei einem Siloentnahmegerät der eingangs genannten Art mit den Merkmalen des kennzeichnenden Teils des Anspruches 1 gelöst.

Die Unteransprüche betreffen besonders vorteilhafte Ausbildungen der Erfindung. Anspruch 1 und die Unteransprüche bilden dabei gleichzeitig einen Teil der Beschreibung der Erfindung.

Durch die Anwendung eines elektrischen Stellungsgebers an jeder der beiden Schwenkachsen des Silokammes deren Signale in einer elektronischen Steuerung mit den einprogrammierten Sollwerten verglichen werden, aus deren Differenz von der elektronischen Steuerung die Stellsignale für die elektrohydraulischen Schaltventile zur Betätigung der hydraulischen Stellzylinder ermittelt werden, erhält man eine sehr einfache und genaue Steuerung des Silokammes.
Mit diesen Stellsignalen werden die Stellzylinder über die Schaltventile in die von der Steuerung errechneten Sollpositionen nachgeführt.

Die Vorprogrammierung für die Einstellung einer bestimmten Position des Silokammes und besonders einer bestimmten Stellung des Schneidschildes erfolgt ebenso wie ihre Abänderung durch Programmieren der elektronischen Steuerung auf dem Siloentnahmegerät von einem Bedienungspaneel aus, auf dem wichtige Daten, insbesonders die Positionsdaten des Silokammes, in Zahlen-, Kurven- oder Bilddarstellung, aufrufbar sind.

Eine sehr wesentliche Verbesserung der Arbeitsweise des Silokammes wird dadurch erreicht, daß der Öldruck während des Abstechens der Silage mit dem Schneidschild vom Futterstock an dem arbeitenden Stellzylinder mit einem elektrischen Druckaufnehmer gemessen, in ein elektrisches Signal umgesetzt und der elektronischen Steuerung zugeführt wird, wo er mit einem vorprogrammierten Grenzwert verglichen wird um ein Festklemmen oder Überlasten des Silokammes zu vermeiden.

In einer vereinfachten Bauweise kann an Stelle eines auf die elektronische Steuerung einwirkenden Druckaufnehmers für den Öldruck in der Hydraulikleitung des Stellzylinders für die Abschwenkung des Hubarmes ein hydromechanisches Druckbegrenzungsventil eingesetzt werden, das vom Öldruck in dieser Hydraulikleitung gesteuert wird und dessen Ansprechschwelle voreinstellbar ist und das bei Überschreiten des eingestellten Öldruckes die Hydraulikleitung absperrt und nach Absinken unter diesen oder bei Unterschreiten eines zweiten, einstellbaren tieferen Öldruck diese wieder öffnet.

Zusätzlich kann mit diesem Grenzwert der einer bestimmten Zugkraft am Stellzylinder entspricht, ein vorprogrammierter Bewegungsablauf des Schneidschildes ausgelöst werden, bei dem dieser vom zweiten Stellzylinder in Richtung des Transport- oder Mischbehälters oder dergleichen so weit geschwenkt wird, daß das abgestochene Silagestück abgetrennt wird und nach Beendigung dieses Abtrennvorganges der Schneidschild von der elektronischen Steuerung in die vorher gespeicherte Ausgangsposition zurückgeführt und der Abtrennvorgang selbsttätig wieder in Gang gesetzt wird.

Es ist auch möglich, anstelle eines elektrischen Druckaufnehmers in der Hydraulikleitung des Stellzylinders einen mechanischen Kraftaufnehmer, in Form eines elektrischen Kraftaufnehmerbolzens, an einer der beiden Anlenkungen des hydraulischen Stellzylinders für das Heben und Senken des Hubarmes, für die Umsetzung der auftretenden Zugkraft in der vorbeschriebenen Weise zu verwenden.

Eine weitere Verbesserung wird erreicht, wenn auch die Hydraulikleitung des zweiten Stellzylinders für das Verschwenken des Schneidschildes in Längsrichtung des Transport- oder Mischbehälters oder dergleichen ein elektrischer Druckaufnehmer für den Öldruck eingebaut oder in eine der beiden Anlenkungen des zweiten Stellzylinders ein elektrischer Kraftaufnehmerbolzen eingesetzt ist, mit denen bei Überschreiten einer vorprogrammierbaren Kraft die elektronische Steuerung ein elektrisches Signal für das elektrohydraulische Schaltventil des zweiten Stellzylinders für das Schneidschild zur Auslösung einer Hebebewegung um einen vorprogrammierbaren Höhenbetrag abgibt.

Es ist auch in diesem Fall möglich, in vereinfachter Bauweise an Stelle eines auf die elektronische Steuerung einwirkenden Druckaufnehmers für den Öldruck in der Hydraulikleitung des Stellzylinders für die Verschwenkung des Schneidschildes in Richtung auf das Siloentnahmegerät ein hydromechanisches Druckbegrenzungsventil einzusetzen, das vom Öldruck in dieser Hydraulikleitung gesteuert wird und dessen Ansprechschwelle voreinstellbar ist und das bei Überschreiten des eingestellten Öldruckes die Hydraulikleitung absperrt und nach Absinken unter diesen oder bei Unterschreiten eines zweiten, einstellbaren tieferen Öldruck diese wieder öffnet.

Eine vorteilhafte Ausgestaltung der Steuerung besteht in der Anwendung eines dritten elektrohydraulischen Schaltventils für die Betätigung des hydraulischen Antriebes einer Entladevorrichtung, die aus einer einfachen Kippvorrichtung oder aus einem Förderband oder einer Förderschnecke bestehen kann, wobei die Steuerung vorteilhafterweise Weise vom Bedienungspaneel aus erfolgt.

Die Gestaltung des Schneidschildes als Abdeckung für die offene Stirnwand des Transport- und/oder Mischbehälters oder dergleichen und als Ladeschaufel ermöglicht einen hohen Beladungsgrad und eine einfache Handhabung des Transportes der Silage vom Silo zum Futtertisch.

Die Teilung des Schneidschildes der Höhe nach und die Lagerung des unteren, wesentlich weniger hohen Teiles mit dem Reißkamm, um eine waagrechte Schwenkachse verschwenkbar an einem oberen Teil gelagert, ermöglicht die Trennung der Abtragungsbewegung von der Verstellung des ganzen Schneidschildes. Es wird dadurch eine wesentliche Verringerung der beim Abtragen bewegten Massen erreicht, wodurch sich Verschleiß und Energieaufwand bedeutend verringern.

Bei Verwendung eines Ölmotors kommt noch dazu, daß die hin und her gehende Bewegung erst von den Nocken einer Nockenwelle erzeugt wird, so daß das Antriebsmittel wesentlich geschont ist.

Es ist auch möglich den unteren Teil des Schneidschildes nochmals in der Breite ein oder mehrmals zu unterteilen und die Abtragungsbewegungen der einzelnen Teile gegeneinander phasenverschoben ablaufen zu lassen, wodurch eine Verringerung der Druckspitzen und eine Vergleichmäßigung im hydraulischen Kreislauf stattfindet und eine wesentliche Verminderung der an der Maschine auftretenden Reaktionskräfte die Folge ist.
Besonders vereinfacht wird die Anwendung eines geteilten Schneidschildes, wenn der Abtragungsvorgang nach der Position des Schneidschildes und/oder nach der Höhe des Öldruckes selbsttätig ausgelöst und beendet wird.

Eine besonders vorteilhafte Ausgestaltung der Erfindung besteht in der Gestaltung der Durchführung der Silageentnahme aus dem Fahrsilo bei dem die einzelnen Stellungen des Silokammes, die Hebe- und Senkbewegungen und die Verschwenkbewegungen mit dem Schneidschild an den jeweiligen Futterstock eines Fahrsilos angepaßt werden können, in dem die Daten für diese Stellungen mit dem Bedienungspaneel in die elektronische Steuerung des Siloentnahmegerätes einprogrammierbar sind, wodurch ein teilweiser oder vollständig automatischer Futterentnahmevorgang ermöglicht wird.

Für den selbsttätigen Ablauf der Silageentnahme und Beladung ist die Einprogrammierung eines begrenzenden Öldruckes oder einer gleichwertigen begrenzenden Zugkraft für das Unter-brechen der Abstichbewegung des Schneidschildes von beson-derem Vorteil besonders dann, wenn sich daran eine vorprogrammbierbare Abscherbewegung des Schneidschildes durch Verschwenken in Längsrichtung des Transport- und/oder Mischbehälters oder dergleichen anschließt, die in Form einer ein- oder mehrmaligen Hin- und Herbewegung des Schneidschildes programmiert sein kann.

Die Abänderung der programmierbaren Einstellungen ist zur Anpassung an die unterschiedlichen Zusammensetzungen der Silage von großem Vorteil.

Für den ununterbrochenen, störungsfreien Ablauf des Verfahrens ist es dabei von Vorteil, wenn nach dem Abtrennen der Silage durch Verschwenken des Schneidschildes um einen vorprogrammierten Winkel, der etwa ein Maß für die Abtragungsdicke der Silage bildet, die Rückstellung des Schneidschildes in die Abstichstellung, die er vor dem Erreichen des Grenzdruckes eingenommen hatte, erfolgt, sodaß der Abstichvorgang selbsttätig wieder dort fortgesetzt wird, wo er vorher endete, wodurch eine weitgehend ebene Anschnittfläche am Futterstock entsteht, was für den Erhalt der Qualität der Silage wichtig ist.

Durch die Ausführung des Entnahmearbeit, die in aneinandergereihten Arbeitszyklen abläuft, ist die Festlegung bestimmter Stellungen des Silokammes von Bedeutung, die, jeweils angepaßt an den Futterstock eines Fahrsilos, in die elektronische Steuerung einprogrammiert werden müssen.

Dies sind im wesentlichen, die Grundstellung des Schneidschildes auf der Bodenplatte des Siloentnahmegerätes und die Ausgangsposition vor dem Abtragen der Silage bei der der Reißkamm des Schneidschildes oberhalb der Schnittkante des Futterstockes angeordnet ist. Weiters ist es für den selbsttätigen Ablauf der Entnahmearbeit ist es wichtig, die Winkeldifferenz für das Verschwenken des Schneidschildes für die Abtragungsdicke bei jeder Abstichstellung des Schneidschildes während eines Arbeitszyklus' und die Winkeldifferenz für jeden aufeinanderfolgenden Arbeitszyklus an die Geometrie und Zusammensetzung des Fahrsilos angepaßt zu programmieren, was vom Bedienungspaneel aus geschehen kann.

Für eine vereinfachende Durchführung der Entnahmearbeit, besonders bei Verwendung von vereinfachenden Schaltmitteln für den Öldruck in der entsprechenden Hydraulikleitung ist es möglich für Überführung des Schneidschildes in die Ausgangsposition eines Arbeitszyklus' stets die bei einer gegebenen geometrischen und technischen Gestaltung des Siloentnahmegerätes größtmögliche Schwenkhöhe des Hubarmes über die Winkelstellung der beiden Stellungsgeber mit dem Bedienungspaneel einzuprogrammieren. Für jeden Abtragungsschritt, in jeder beliebigen Höhenstellung des Hubarmes, wird dabei vorteil-hafterweise die Differenz der Winkelstellungen für den Anfang und das Ende eines solchen Abtragungsschrittes einprogrammiert, mit dem die Höhe des abgetragenen Silagestückes festgelegt wird.

Für die eigentliche Abtragung des abgestochenen Silagestückes ist es einfach und zuverlässig, die Schwenkbewegung des Schneidschildes in Richtung auf das Siloentnahmegerät zu, mit der Differenz zwischen der Winkelstellung des Winkelgebers bei Beginn des Abstechens und nach Beendigung des Vorganges, für jede beliebige Schwenkstellung des Schneidschildes einzuprogrammieren.

Ebenso ist es vorteilhaft für die Rückführung des Schneidschildes in die Ausgangsposition die Verschwenkung des Hubarmes nach oben nach Abtragen des Silagestückes mit einer, die Höhe des abgetragenen Silagestückes überschreitenden, Winkeldifferenz am Winkelgeber des Hubarmes, zwischen dem Beginn und dem Ende dieser Bewegung einprogrammierbar ist.

Zur Verschwenkung des Schneidschildes in die Ausgangsposition für den nächsten Abtragungsschritt ist es von Vorteil, wenn die Winkeldifferenz des Winkelgebers für den Schneidschild, für dessen Bewegung in die Abtragestellung nach vorne vom Siloentnahmegerät weg gerichtet, die im wesentlichen der Dicke eines abzutragenden Silagestückes entspricht, für jede beliebige Stellung des Hubarmes und des Schneidschildes einprogrammierbar ist.

Für die Herstellung eines, im wesentlichen lotrechten, Anschnittes des Futterstockes sind die Winkelstellungen der Winkelgeber an den beiden Schwenkachsen des Silokammes zwischen dessen zueinander verschwenkbaren Teilen und zusätzlich die Größe des Winkels am Winkelgeber für den Hubarm in den aufeinanderfolgenden Einstichstellungen des Schneidschildes in die elektronische Steuerung zu speichern, nach denen der darauffolgende Abstichvorgang im nächsten Abtragungszyklus selbsttätig ablaufen kann.

Ebenso ist die Verschwenkung des Schneidschildes für das Einschaufeln der abgetrennten Silage durch Einprogrammieren der Winkeldifferenz für die Schaufelbewegung in die elektrische Steuerung über das Bedienungspaneel sehr einfach möglich, sodaß anschließend nur das Signal für den Beginn und die Beendigung des Einschaufelns gegeben werden muß.

Es ist selbstverständlich möglich ein Siloentnahmegerät durch Aufbauen auf einen Transportwagen, insbesonders einen Futtermischwagen, und auch auf einen selbstfahrenden Transport- oder Futtermischwagen herzustellen, bei denen die automatische und zyklische Steuerung des Abtragungsvorganges noch vorteilhafter ist, als für ein kleineres und leichter überblickbares Anbaugerät.

Die Erfindung wird anhand der Zeichnung eines Ausfünrungsbeispieles beschrieben.

Es zeigt:

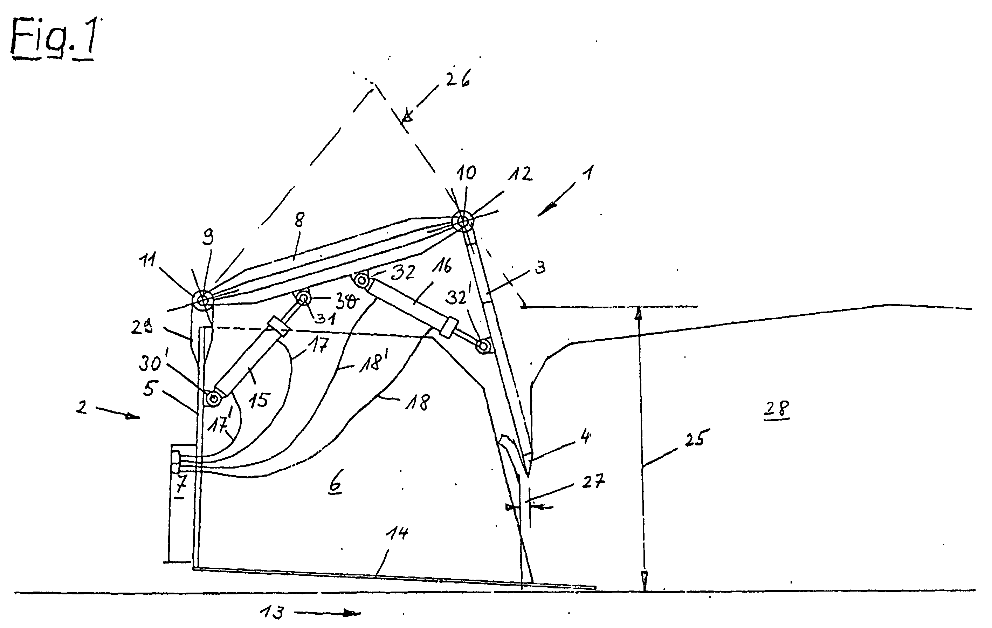

- Fig. 1: ein Siloentnahmegerät mit einem Transportbehälter, während des Abtragens der Silage vom Futterstock eines Fahrsilos, in Seitenansicht, schematisch;
- Fig. 2: ein Schema für die Signalabgabe und die Anordnung der Steuerungsmittel und der elektronischen Steuerung für ein Siloentnahmegerät.
- Fig. 3: einen Silokamm mit einem geteilten Schneidschild mit hydraulischen Stellzylindern für den unteren Teil desselben, in Seitenansicht;
- Fig. 4: einen Silokamm mit einem geteilten Schneidschild wie in Fig. 3 mit einem Antrieb über eine Nockenwelle mit Ölmotor, von vorne gesehen;
- Fig. 5: den Schneidschild nach Fig. 4, in Seitenansicht.

Ein Siloentnahmegerät besteht aus einem Transportbehälter 2 mit Seitenwänden 6 und einer Bodenplatte 14, der mit einer Rückwand 5 verschlossen ist, die mit dem Geräterahmen 29 und der Anschlußvorrichtung 7 für den Anbau an ein Zugfahrzeug verbunden ist.

Am Geräterahmen 29 ist oberhalb der Rückwand 5 ein Hubarm 8 an einer ersten, waagrecht und quer zur Längsrichtung 13 des Transportbehälters 2 ausgerichteten, Schwenkachse 9 gelagert und mit einem, an der Rückwand 5 bzw. am Geräterahmen 29 mit der Anlenkung 30' und an dem Hubarm 8 mit der Anlenkung 30 gelagerten ersten, doppeltwirkenden Stellzylinder 15 höhenverschwenkbar ausgebildet.

An dem unteren Ende des Hubarmes 8 ist ein Schneidschild 3 quer zur Längsrichtung 13 des Transportbehälters 2 angeordnet und um eine parallel zur ersten Schwenkachse 9 ausgerichteten zweiten Schwenkachse 10 verschwenkbar gelagert und an seinem unteren Ende mit einem Reißkamm 4 versehen. Der Reißkamm 4 ist in den Futterstock des Fahrsilos 28 einstechend und dabei die Abtragungsdicke 27 der Silage abstechend, dargestellt.

Die Stellungen von Hubarm 8 und Schneidschild 3 sind in der Ausgangsposition 26, in der die maximale Abtragungshöhe 25 eingestellt ist, mit durchbrochenen Linien angedeutet, während gleichzeitig die Bodenplatte 14 unter den Futterstock des Fahrsilos 28 ein Stück eingeschoben ist.

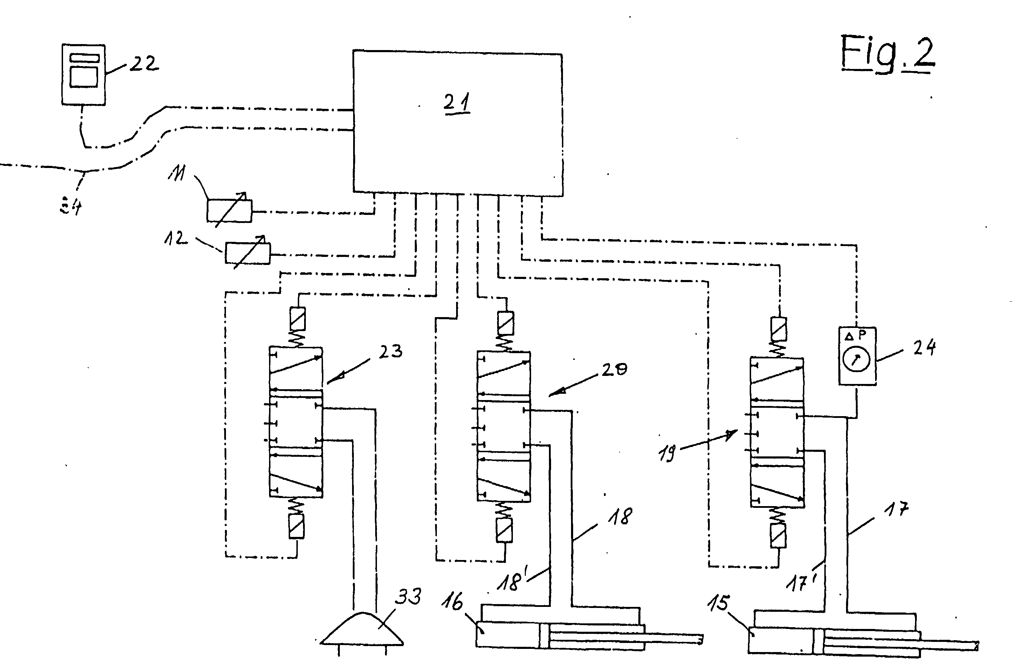

In Fig. 2 ist die Anordnung der Steuerungsmittel für die Betätigung des Fahrsiloentnahmegerätes wiedergegeben, bei der eine elektronische Steuerung 21 mit veränderbar programmierbaren Rechen- und Speicherchips die vorprogrammierte Steuerung des Silokammes 1 in den aufeinanderfolgenden Abtragungszyklen übernimmt.

Der erste und zweite hydraulische Stellzylinder 15 und 16 werden jeweils über ein zugeordnetes elektrohydraulisches Schaltventil 19 und 20 betätigt, das den Zufluß des Hydrauliköls in die Hydraulikleitungen 17,17' des ersten Stellzylinders 15 zum Senken und Heben des Silokammes 1 und in die Hydraulikleitungen 18,18' des zweiten Stellzylinders 16 zum Verschwenken des Schneidschildes 3 öffnet und schließt.

An der ersten Schwenkachse 9 des Hubarmes 8 ist ein erster elektrischer Stellungsgeber 11 angebracht mit dem die Winkelstellung zwischen Hubarm 8 und Geräterahmen 29 in ein elektrisches Signal umgesetzt an die elektronische Steuerung 21 abgegeben wird. An der zweiten Schwenkachse 10 des Schneidschildes 3 ist ein zweiter elektrischer Stellungsgeber 12 angebracht mit dem in gleicher Weise die Winkelstellung zwischen Hubarm 8 und Schneidschild 3 als elektrisches Signal umgesetzt an die elektronische Steuerung 21 abgegeben wird.

In der Hydraulikleitung 17 für die Seite des ersten Stellzylinders 15 zum Senken des Schneidschildes 3 ist ein elektrischer Druckaufnehmer 24 eingebaut, der ein elektrisches Signal an die elektronische Steuerung 21 abgibt, das dem in der Leitung auftretenden Öldruck entspricht.

Parallel dazu ist an der Anlenkung 30 des ersten Stellzylinders 15, der andererseits mit der Anlenkung 30' an der Rückwand 5 bzw. am Geräterahmen 29 angelenkt ist, am Hubarm 8 ein elektrischer Krauftaufnehmerbolzen 31 eingesetzt, der in elektrische Signale umgesetzte Zugkraft an die elektronische Steuerung 21 abgibt.

Der zweite Stellzylinder 16 ist am Hubarm 8 mit der Anlenkung 32 und am Schneidschild mit der Anlenkung 32' gelenkig befestigt.

Für die Betätigung des hydraulischen Antriebes 33 einer Entladevorrichtung ist ein drittes, elektrohydraulisches Schaltventil 23 vorgesehen mit dem der Antrieb über das Bedienungspaneel 22 geschaltet werden kann.

In Fig. 2 ist weiters noch die elektrische Spannungsversorgung, die gewöhnlich vom Zugfahrzeug aus erfolgt, für die elektronische Steuerung 21 angedeutet.

Die Beschreibung des Ablaufes der Entnahmearbeit und der Beladung mit den Erfordernissen der Programmierung ist allgemein im ersten Teil der Beschreibung und im einzelnen in den Ansprüchen enthalten.

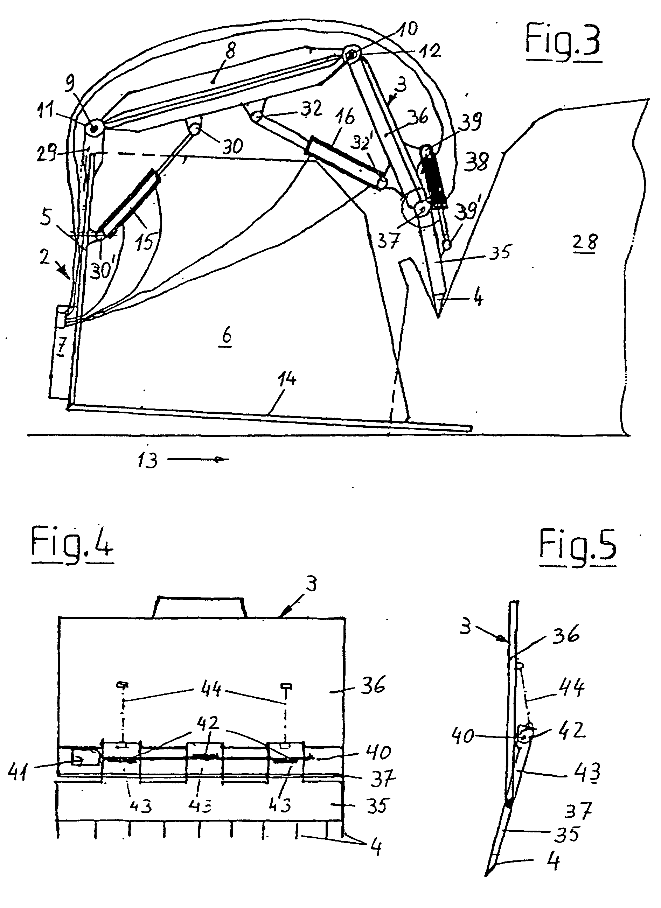

In den Fig. 3 bis 5 ist eine abgewandelte Bauart des Schneidschildes 3 wiedergegeben. Bei einem Silokamm der vorbeschriebenen Bauart und Funktion ist der Schneidschild 3 der Höhe nach geteilt ausgeführt und besteht aus einem schmäleren unteren Teil 35 mit dem Reißkamm 4, der um eine waagrecht ausgerichtete Schwenkachse 37 an einem breiteren oberen Teil 37 des Schneidschildes 3 gelagert und in Längsrichtung 13 des Transportbehälters 2 hin und her verschwenkbar ist.

Die Verschwenkung geschieht mit Hilfe von zwei beabstandet auf der dem Futterstock zugewandten Seite des Schneidschildes 3 angebrachten doppeltwirkenden hydraulischen Stellzylindern 38, die an dem unteren Teil 35 und an dem oberen Teil 36 an Anlenkungen 39,39' gelenkig befestigt sind.

Die Steuerung der Stellzylinder 38 geschieht über die dargestellten Hydraulikleitungen von einer hydraulischen und elektronischen Steuerung 21 von einem Bedienungspaneel 22 aus, die in Fig. 2 wiedergegeben sind.

In Fig. 4 und 5 ist eine andere Art des Antriebes für den verschwenkbaren unteren Teil 35 des Schneidschildes 3 in Form einer Nockenwelle 40, die von einem Ölmotor angetrieben ist, wiedergegeben.

Die Nockenwelle 40 ist an Hebeln 43 oder dergleichen des unteren Teiles 35 des Schneidschildes 3 parallel zur Schwenkachse 37 ausgerichtet gelagert, die nach oben zu, gegenüber der Vorderseite des oberen Teiles 36 die dem Futterstock zugewandt ist, verlängert sind. Die Nockenwelle 40 wird seitlich von einem Ölmotor 41 angetrieben und ihre Nocken 42 laufen an der Vorderseite des Schneidschildes 3 auf und bewirken auf diese Weise die Verschwenkbewegung des unteren Teiles 35 des Schneidschildes 3.

Die Rückschwenkbewegung des unteren Teiles 35 wird mit Hilfe von Federn 44, die zwischen den Hebeln 43 des unteren Teiles 35 und dem oberen Teil 36 des Schneidschildes 3 ausgespannt sind.

Die Stellzylinder 38 oder der Ölmotor 41 werden beim Abtragungsvorgang nach Erreichen einer einprogrammierten Abtrageposition des Schneidschildes 3 oder eines vorgebenen Öldrukkes eingeschaltet und nach dessen Beendigung nach Absinken des Öldruckes oder der Einnahme einer veränderten Position des Schneidschildes 3 nach dem Abtragevorgang wieder abgeschaltet.

### Bezugszeichen

- 1: Silokamm
- 2: Transport- oder Mischbehälter
- 3: Schneidschild des Silokammes 1
- 4: Reißkamm des Schneidschildes
- 5: Rückwand des Transport- oder Mischbehälters 2
- 6: Seitenwand des Transport- oder Mischbehälters 2
- 7: Anschlußvorrichtung
- 8: Hubarm
- 9: erste Schwenkachse für den Hubarm 8
- 10: zweite Schwenkachse für den Schneidschild 3
- 11: erster elektrischer Stellungsgeber an der ersten Schwenkachse 9
- 12: zweiter elektrischer Stellungsgeber an der zweiten Schwenkachse 10
- 13: Längsrichtung des Transportbehälters 2
- 14: Bodenplatte des Transportbehälters 2
- 15: erster doppeltwirkender hydraulischer Stellzylinder für den Hubarm 8
- 16: zweiter doppeltwirkender hydraulischer Stellzylinder für den Schneidschild 3
- 17,17': Hydraulikleitungen des ersten Stellzylinders 15
- 18,18': Hydraulikleitungen des zweiten Stellzylinders 16
- 19: erstes elektrohydraulisches Schaltventil für den ersten Stellzylinder 15, zum Heben und Senken
- 20: zweites elektrohydraulisches Schaltventil für den zweiten Stellzylinder 16 zum Verschwenken des Schneidschildes 3
- 21: elektronische Steuerung
- 22: Bedienungspaneel
- 23: drittes elektrohydraulisches Schaltventil für die Entladevorrichtung
- 24: Druckaufnehmer in der Hydraulikleitung 17 des Stellzylinders 15 auf der Seite für das Senken des Hubarmes 8
- 25: Abtragungshöhe des Fahrsilos 28 durch den Silokamm 1
- 26: Ausgangsposition des Silokammes 1 vor dem Abtragungsvorgang
- 27: Abtragungsdicke der Silage bei einem Abtragungszyklus
- 28: Fahrsilo
- 29: Geräterahmen
- 30,30': Anlenkung des ersten Stellzylinders 15 zwischen Hubarm 8 und Geräterahmen 29
- 31: elektrischer Kraftaufnehmerbolzen
- 32, 32': Anlenkung des zweiten Stellylinders 16 zwischen Hubarm 8 und Schneidschild 3
- 33: hydraulischer Antrieb für die Entladevorrichtung
- 34: elektrische Spannungsversorgung
- 35: unterer Teil des Schneidschildes 3
- 36: oberer Teil des Schneidschildes 3
- 37: Schwenkachse für den unteren Teil 35 des Schneidschildes 3
- 38: doppeltwirkender hydraulischer Stellzylinder für den unteren Teil 35 des Schneidschildes 3
- 39,39': Anlenkungen des Stellzylinders 38 an den unteren Teilen 35 und an den oberen Teil 36
- 40: Nockenwelle
- 41: Ölmotor
- 42: Nocke der Nockenwelle 40
- 43: Hebel des unteren Teiles 35 des Schneidschildes 3
- 44: Feder zwischen dem unteren Teil 35 und dem oberen Teil 36 des Schneidschildes 3

## Patentansprüche

1. Fahrsiloentnahmegerät, angebaut an einen Transport- und/oder Mischbehälter, insbesonders an einen Transport- oder Mischwagen oder dgl., der zumindest einen Boden und Seitenwände und eine Rückwand aufweist und an dessen offener Stirnseite ein Silokamm angeordnet ist, dessen Schneidschild von einem mittig angeordneten Hubarm oder von zwei beiderseits angeordneten Hubarmen getragen ist, der oder die an dem Schneidschild jeweils mit einer im wesentlichen im rechten Winkel zu der Längsrichtung des Transport- und/oder Mischbehälters waagerecht ausgerichteten zweiten Schwenkachse angelenkt ist/sind und anderenends am Geräterahmen, insbesonders oberhalb des Transport- und/oder Mischbehälters und insbesonders im Bereich von dessen Rückwand um eine parallel zu der zweiten Schwenkachse des Schneidschildes ausgerichtete erste Schwenkachse höhenverschwenkbar gelagert ist/sind und wobei zwischen Hubarm und Geräterahmen jeweils ein erster doppelwirkender hydraulischer Stellzylinder für die Höhenbewegung und zwischen Hubarm und Schneidschild des Silokammes jeweils ein zweiter, doppeltwirkender hydraulischer Stellzylinder für die Verschwenkbewegung des Schneidschildes in Längsrichtung des Transport- und/oder Mischbehälters oder dgl. gelenkig angeordnet sind, die jeweils mit einem hydraulischen Schaltventil für die Höhenbewegung und einem hydraulischen Schaltventil für die Verschwenkbewegung getrennt ansteuerbar sind, **dadurch gekennzeichnet, daß** an der ersten Schwenkachse (9) zwischen dem Geräterahmen (5) und einem Hubarm (8) ein erster elektrischer Stellungsgeber (11), für die Schwenklage des/der Hubarme(s), und an der zweiten Schwenkachse (10) zwischen einem Hubarm (8) und dem Schneidschild (3) des Silokammes (1) ein zweiter elektrischer Stellungsgeber (12), für die Schwenklage des Schneidschildes (3), angebracht sind, die mit einer elektronischen Steuerung (21) verbunden sind, von der die elektrischen Steuerungssignale zur Betätigung des ersten elektrohydraulischen Schaltventils (19) des ersten hydraulischen Stellzylinders (15) für die Höhenbewegung des Silokammes (1) und zur Betätigung des zweiten elektrohydraulischen Schaltventils (20) für die Betätigung des zweiten hydraulischen Stellzylinders (16) für die Verschwenkung des Silokammes (1) in Längsrichtung (13) des Transport- oder Mischbehälters (2) nacheinander oder gleichzeitig abgegeben werden, wobei die elektronische Steuerung (21) über ein elektrisch verbundenes Bedienungspaneel (22) beeinflußbar ist und auf dem insbesonders zumindest wesentliche Daten für die Steuerung des Silokammes (1) angezeigt werden.

2. Fahrsiloentnahmegerät nach Anspruch 1, **dadurch gekennzeichnet, daß** zumindest in der Hydraulikleitung (17) des ersten Stellzylinders (15), auf der Seite für das Absenken des Hubarmes (8), ein erster Druckaufnehmer (24) eingebaut ist, der den aufgenommenen Öldruck in elektrische Signale umgesetzt an die elektronische Steuerung (21) abgibt oder, daß zumindest an einer der Anlenkungen (30 oder 30') zumindest des ersten Stellzylinders (15) an dem Hubarm (8) oder an dem Geräterahmen (29) ein elektrischer Kraftaufnehmerbolzen (31) eingebaut ist, der die aufgenommene Zugkraft in elektrische Signale umgesetzt an die elektronische Steuerung (21) abgibt.

3. Fahrsiloentnahmegerät nach Anspruch 1, **dadurch gekennzeichnet, daß** zumindest in der Hydraulikleitung (17) des ersten Stellzylinders (15), auf der Seite für das Absenken des Hubarmes (8), ein, insbesonders hydromechanisches, druckgesteuertes Druckbegrenzungsventil eingebaut ist, das bei Überschreiten eines voreingestellten Hydrauliköldruckes die Hydraulikleitung (17) zumindest des ersten Hydraulikzylinders (15) sperrt, die nach Unterschreiten dieses, oder vorzugsweise eines voreingestellten Hydrauliköldruckes in dieser, diese wieder öffnet.

4. Fahrsiloentnahmegerät nach Anspruch 1 oder 2, **dadurch gekennzeichnet, daß** zumindest in der Hydraulikleitung (18) des zweiten Stellzylinders (16), auf der Seite für die Verschwenkung des Schneidschildes (3) des Silokammes (1) in Richtung auf den Transport- oder Mischbehälter (2) hin, ein zweiter Druckaufnehmer eingebaut ist, der den aufgenommenen Öldruck in elektrische Signale umgesetzt an die elektronische Steuerung (21) abgibt oder daß ein zweiter elektrischer Druckaufnehmerbolzen (31) an einer der Anlenkungen (32,32') des zweiten Stellzylinders (16) an dem Hubarm (8) oder an dem Schneidschild (2) eingebaut ist, der die aufgenommene Zugkraft in elektrische Signale umgesetzt an die elektronische Steuerung (21) abgibt.

5. Fahrsiloentnahmegerät nach einem der Ansprüche 1 bis 4, **dadurch gekennzeichnet, daß** zumindest in der Hydraulikleitung (18) des zweiten Stellzylinders (16), auf der Seite für die Verschwenkung des Schneidschildes (3) ein, insbesonders hydromechanisches, druckgesteuertes Druckbegrenzungsventil eingebaut ist, das bei Überschreiten eines voreingestellten Hydrauliköldruckes die Hydraulikleitung (18) zumindest des zweiten Hydraulikzylinders (16) sperrt, die nach Unterschreiten dieses, oder vorzugsweise eines voreingestellten Hydrauliköldruckes, diese wieder öffnet.

6. Fahrsiloentnahmegerät nach einem der Ansprüche 1 bis 5, **dadurch gekennzeichnet, daß** ein drittes elektrohydraulisches Schaltventil (23) von der elektronischen Steuerung (21) Steuerungssignale für die Betätigung, insbesonders für das Ein- und Ausschalten einer Entladevorrichtung erhält, die als Kippvorrichtung des Transport- und Mischbehälters (2) oder als eine in diesen ein- oder an diesen angebaute Austragseinrichtung ausgebildet ist, wobei die Umschaltung des dritten elektrohydraulischen Schaltventils (23) jeweils mit einem von dem Bedienungspaneel (22) aus durch Betätigung an die elektronische Steuerung (21) abgegebenen elektrischen Steuersignal ausgelöst wird.

7. Fahrsiloentnahmegerät nach einem der Ansprüche 1 bis 6, **dadurch gekennzeichnet, daß** der Schneidschild (3) des Silokammes (1) zwischen die Seitenwände (6) des Transport- oder Mischbehälters (3), an diesen im wesentlichen für das Silagegut dichtend geführt, einschwenkbar angeordnet ist und in der Grundstellung, mit dem Reißkamm (4) oder dgl. an seinem unteren Ende, auf der Bodenplatte (14) aufstehend, einen Verschluß des Transport- oder Mischbehälters (2) bildet.

8. Fahrsiloentnahmegerät nach einem der Ansprüche 1 bis 7, **dadurch gekennzeichnet, daß** der Schneidschild (3) des Silokammes der Höhe nach geteilt ausgebildet ist, wobei ein unterer Teil (35) mit dem Reißkamm (4) an einem oberen Teil (36) um eine waagrechte Schwenkachse (37) scharnierend verschwenkbar angebaut ist und vermittels wenigstens eines und vorzugsweise zweier beabstandeter, doppeltwirkender hydraulischer Stellzylinder (38), die insbesonders an der, dem Fahrsilo (28) zugewandten Seite des Schneidschildes (3) angeordnet sind und an Anlenkungen (39,39') an den beiden Teilen (35 und 36) des Schneidschildes (3) angelenkt sind und der untere Teil (35) in Längsrichtung (13) des Transportbehälters (2) hin- und her verschwenkend bewegbar ist.

9. Fahrsiloentnahmegerät nach einem der Ansprüche 1 bis 7, **dadurch gekennzeichnet, daß** der untere Teil (35) des Schneidschildes (3) über die Anlenkung der Schwenkachse (37) nach oben, vorzugsweise an der dem Fahrsilo (28) zugewandten Seite des Schneidschildes (3) mit Hebeln (43) oder dergl. Verlängert ist, an denen eine durchgehende, von einem vorzugsweise seitlich angeordneten Ölmotor (41) angetriebene Nockenwelle (40) gelagert ist, deren Nocken (42) der unteren Teil (35) des Schneidschildes (3) in Längsrichtung (13) des Transportbehälters (2) hin- und her schwenkend bewegen, wobei das Zurückschwenken unter der Kraft wenigstens einer Feder (44) erfolgt.

10. Fahrsiloentnahmegerät nach einem der Ansprüche 7 oder 8, **dadurch gekennzeichnet, daß** der wenigstens eine doppeltwirkende hydraulische Stellzylinder (38) oder der Ölmotor (41) nach Erreichen einer in die elektronische Steuerung einprogrammierten Abtrageposition des ersten und des zweiten Stellungsgebers (11 und 12) oder nach Erreichen eines einprogrammierten Öldruckes selbsttätig einschaltbar und nach Beendigung des Abtragevorganges wieder selbsttätig abschaltbar sind.

11. Fahrsiloentnahmegerät, nach einem der Ansprüche 1 bis 10, **dadurch gekennzeichnet, daß** die elektronischen Steuerung (21), die mit dem Bedienungspaneel (22) programmierbar ist, durch Eingabe abgeänderter Signale zumindest für die Ausgangs- und Endstellungen des Silokammes (1) und wenigstens für die Hebe- und Senkbewegungen und für die Bewegung des Silokammes (1) in Längsrichtung (13) des Transport- oder Mischbehälters (2) in Richtung auf diesen zu, nach den Signalen der Stellungsgeber (11,12) abänderbar programmierbar ist.

12. Fahrsiloentnahmegerät nach einem der Ansprüche 1 bis 11, **dadurch gekennzeichnet, daß** die elektronische Steuerung (21) für die Grundstellung des Schneidschildes (3) des Silokammes (1) auf der Bodenplatte (14) des Transport- oder Mischbehälters (2) aufstehend, mit den Winkelstellungen des ersten und des zweiten elektrischen Stellungsgebers (11 und 12) für die Stellung des Hubarmes (8) und des Schneidschildes (3) abänderbar programmierbar ist.

13. Fahrsiloentnahmegerät nach einem der Ansprüche 1 bis 12, **dadurch gekennzeichnet, daß** die mit dem Bedienungspaneel (22) programmierbare elektronische Steuerung (21) für die Abtragungshöhe (25) des Fahrsilos (28) mit dem Silokamm (1) durch dessen Verschwenken in die Ausgangsposition (26) für das Abtragen der Silage über die Winkelstellungen der beiden Stellungsgeber (11,12) abänderbar programmierbar ist.

14. Fahrsiloentnahmegerät, nach einem der Ansprüche 1 bis 13, **dadurch gekennzeichnet, daß** in die elektronische Steuerung (21) ein oberer begrenzender Öldruck des ersten Druckaufnehmers (24) in der Hydraulikleitung (17) auf der Seite für das Absenken des ersten Stellzylinders (15), oder eine obere begrenzende Zugkraft an dem elektrischen Kraftaufnehmerbolzen (31) an einer der Anlenkungen (30, 30') des ersten Stellzylinders (15) am Hubarm (8) oder an dem Geräterahmen (29), abänderbar einprogrammierbar ist, wo das Absenken des Schneidschildes (3) des Silokammes (1) beim Abtragen der Silage vom Fahrsilo (28) beendet ist und erst nach dem Absinken des Öldruckes oder der elektrisch umgesetzten Zugkraft darunter wieder gestartet wird.

15. Fahrsiloentnahmegerät, nach einem der Ansprüche 1 bis 14, **dadurch gekennzeichnet, daß** in die elektronische Steuerung (21) vom Bedienungspaneel (22) aus, zumindest die Bewegung des Silokammes (1) in Längsrichtung (13) des Transport- oder Mischbehälters (2) in beiden Richtungen, in Abhängigkeit von dem an die elektronische Steuerung (21) abgegebenen Signal des ersten Druckaufnehmers (24) in der Hydraulikleitung (17) auf der Seite für das Absenken des ersten Stellzylinders (15) abänderbar programmierbar und/oder insbesonders steuerbar ist und zusätzlich eine vorwählbare Differenz des Winkels am zweiten Stellungsgeber (12) zwischen dem Hubarm (8) und dem Schneidschild (3) des Silokammes (1) für die Umschaltungen des zweiten elektrohydraulischen Schaltventils (20) für den zweiten Stellzylinder (16) zum Verschwenken des Schneidschildes (3) abänderbar programmierbar ist, die vorzugsweise etwa der Abtragungsdicke (27) der Silage entspricht.

16. Fahrsiloentnahmegerät nach einem der Ansprüche 1 bis 15, **dadurch gekennzeichnet, daß** vom Bedienungspaneel (22) aus in die elektronische Steuerung (22) die Abtragungsdicke (27) der Silage vom Fahrsilo (28) nach der Rückführung des Silokammes (1) in die Ausgangsposition (26), für die die Winkel der elektrischen Stellungsgeber (11 und 12) in der elektronischen Steuerung (21) bereits gespeichert sind, durch eine zum Winkel des zweiten Stellungsgebers (12) hinzutretenden Winkeldifferenz zwischen dem Hubarm (8) und dem Schneidschild (3) abänderbar programmierbar ist, um die der Schneidschild (3) des Silokammes (1) vor jedem Abtragungsvorgang mit den Stellzylindern (15 und 16) nachführbar, ist.

17. Fahrsiloentnahmegerät nach einem der Ansprüche 1 bis 16, **dadurch gekennzeichnet, daß** mit dem Bedienungspaneel (22) in die elektronische Steuerung (21) für einen Abtragungsschritt in beliebiger Höhenstellung des Hubarmes (8), aufeinanderfolgende Winkelstellungen des zugeordneten Stellungsgebers (11) für das Absenken des Schneidschildes (3) des Silokammes (1) für das Abtragen der Silage vom Fahrsilo (28), programmierbar sind.

18. Fahrsiloentnahmegerät nach einem der Ansprüche 1 bis 17, **dadurch gekennzeichnet, daß** mit dem Bedienungspaneel (22) in die elektronische Steuerung (21) aufeinanderfolgende Winkelstellungen der beiden Stellungsgeber (11 und 12) zueinander, jeweils bei einer bestimmten Winkelstellung des ersten Stellungsgebers (11) beim Absenken des Schneidschildes (3) des Silokammes (1) für das Abtragen der Silage vom Fahrsilo (28), für einen im wesentlichen lotrechten Abtragungsschritt, programmierbar sind.

19. Fahrsiloentnahmegerät nach einem der Ansprüche 1 bis 18, **dadurch gekennzeichnet, daß** mit dem Bedienungspaneel (22) in die elektronische Steuerung (21) für einen Abtragungsschritt aufeinanderfolgende Winkelstellungen des zugeordneten Stellungsgebers (12) in beliebiger Höhenstellung des Hubarmes (8), für aufeinanderfolgenden Schwenkstellungen des Schneidschildes (3), beim Abtragen der Silage vom Fahrsilo (28), programmierbar sind.

20. Fahrsiloentnahmegerät nach einem der Ansprüche 1 bis 19, **dadurch gekennzeichnet, daß** mit dem Bedienungspaneel (22) in die elektronische Steuerung (21) für einen Abtragungsschritt in beliebiger Höhenstellung des Hubarmes (8), aufeinanderfolgende Winkelstellungen des zugeordneten Stellungsgebers (11) für die Höhenstellung des Hubarmes (8) und nach Überführung desselben in eine Ausgangsposition, die vorzugsweise die Höhe des abzutragenden Silagestockes des Fahrsilos (28) übersteigt, für das
Verschwenken des Schneidschildes (3) des Silokammes (1) für das Abtragen der Silage vom Fahrsilo (28), programmierbar sind.

21. Fahrsiloentnahmegerät nach einem der Ansprüche 1 bis 20, **dadurch gekennzeichnet, daß** mit dem Bedienungspaneel (22) in die elektronische Steuerung (21) in der nach oben zurückgeführten Stellung des Hubarmes (8), für die Verschwenkung des Schneidschildes (3) um die einprogrammierte Differenz der aufeinanderfolgenden Winkelstellungen des dem Schneidschild (3) zugeordneten Winkelgeber (12) nach vorne, in die Ausgangsposition für einen beliebigen, anschließenden nächsten Abtragungsabschnitt für das Verschwenken des Schneidschildes (3) des Silokammes (1) für das Abtragen der Silage vom Fahrsilo (28), programmierbar sind.

22. Fahrsiloentnahmegerät nach einem der Ansprüche 1 bis 21, **dadurch gekennzeichnet, daß** mit dem Bedienungspaneel (22) in die elektronische Steuerung (21) durch Eingabe einer Winkeldifferenz für den zweiten Stellungsgeber (12), vorzugsweise zu der Grundstellung des Silokammes (1), in der dieser auf der Bodenplatte (14 ) aufsteht, für das Einschaufeln der abgetrennten Silage in den Transport- oder Mischbehälter (2) die Verkleinerung des Winkels zwischen Hubarm (8) und Schneidschild (3) des Silokammes (1), durch die Ausführung der Bewegung in Längsrichtung (13) des Transport- öder Mischbehälters (2), nach der der zweite Stellzylinder (16) geführt wird, programmierbar ist.

23. Fahrsiloentnahmegerät nach einem der Ansprüche 1 bis 22, **dadurch gekennzeichnet, daß** mit dem Bedienungspaneel (22) in die elektronische Steuerung (21) die einander zugeordneten Winkelstellungen der elektrischen Winkelgeber (11 und 12) durch abänderbares Programmieren festlegbar sind, in die die Stellzylinder (15 und 16) nach dem, vorzugsweise über das Bedienungspaneel (22), gegebenen Startbefehl nacheinander durch Ansteuerung des ersten und des zweiten Schaltventils (19 und 20) geführt werden, mit der die einzelnen Arbeitsschritte von der Grundstellung des Silokammes (1) über dessen Ausgangsposition (26) zum Abtragen und bis zum Einschaufeln der abgetragenen Silage in den Transport oder Mischbehälter (2) abgearbeitet werden.

## Claims

1. Device for the discharge of a rolling silo
attached to a transport- and/or mixing-tank, particularly to a transport- or mixing carriage or of that kind, that has, at least, a bottom, sidewalls and a backwall and where a silo-comb is arranged on its open frontside whose cutting-shield is supported by a concentric arranged lift-arm or by two lift-arms on both sides. That is/Those are coupled to the cutting-shield, at a time, with a second turning-axle, which is horizontally adjusted, and essentially at right angles lengthwise of the transport- and/or mixing-tank. In the other end they are/it is mounted on the framework, particularly above the transport- and/or mixing-tank and especially in the zone of its backwall around a first turning-axle swivel-mounted upwards,adjusted parallelly to the second turning-axle of the cutting-shield. With it, there are arranged as joints between lift-arm and framework always a first double-acting hydraulic adjusting cylinder for the movement upwards and between lift-arm and cutting-shield of the silo-comb, always a second, double-acting hydraulic adjusting cylinder for the turning movement of the cutting-shield lengthwise of the transport- and/or mixing-tank or of that kind.
Those always can be controled separately with a hydraulic pilot-valve for the movement upwards and a hydraulic pilot-valve for the turning movement, due to the fact that on the first turning-axle (9) between the framework (5) and a lift-arm (8) a first electric positioner (11) is mounted for the swivelling position of the lift-arms and on the second turning-axle (10) between a lift-arm (8) and the cutting-shield (3) is mounted a second electric positioner (12) for the turning position of the cutting-shield (3). They are connected with an electronic control (21);
from there are transmitted electric control-signals in succession or simultaneously for the operation of the forst electro-hydraulic pilot-valve (19) of the first hydraulic adjusting cylinder (15) to control the movement upwards of the silo-comb (1) and for the operation of the second electro-hydraulic pilot-valve (20) for the operation of the second hydraulic adjusting cylinder (16) to turn the silo-comb (1) lengthwise (13) of the transport- and/or mixing-tank (2). With it, the electronic control (21) is easily influenced by an electric-connected operating panel (22) and where at least especially essential data for the control of the silo-comb (1) are shown.

2. Device for the discharge of a rolling silo
according to claim 1, with the following characteristics:
At least, in the hydraulic-tube (17) of the first adjusting cylinder (15), on the side of the lowering of the lift-arm (8), a first pressure receiver (24) is installed that transmits the received oil-pressure, transformed in electric signals, to the electronic control (21) or, at least, an electric power-receiver-bolt (31) is mounted on one of the links (30/30'), at least of the first adjusting cylinder (15) on the lift-arm (8) or on the framework (29),that transmits the received tractive force, transformed in electric signals, to the electronic control (21).

3. Device for the discharge of a rolling silo
according to claim 1, with the following characteristics:
At least in the hydraulic-tube (17) of the first adjusting cylinder (15), on the side for the lowering of the lift-arm (8), a particularly hydro-mechanic, pressure-controled pressure-restrictor-valve is installed that locks the hydraulic-tube (17), at least of the first hydraulic cylinder (15) when the preadjusted pressure of the hydraulic-oil is exceeded and opens it again when pressure is going down, or, by preference, when the pressure of the hydraulic-oil remains under the pre-adjusted value.

4. Device for the discharge of a rolling silo
according to claim 1 or 2,with the following characteristics:
At least in the hydraulic-tube (17) of the second adjusting cylinder (16), on the side for the turning of zhe cutting-shield (3) of the silo-comb (1), in the direction towards the transport- or mixing-tank (2), a second pressure-receiver is installed that transmits the received pressure, transformed into electric signals, to the electronic control (21) or, alternatively, a second electric pressure-receiver-bolt (31), mounted on one of the links (32/32') of the second adjusting cylinder (16) on the lift-arm (8) or on the cutting-shield (2) that transmits the received tractive force, transformed into electric signals, to the electronic control (21).

5. Device for the discharge of a rolling silo
according to one of the claims 1 to 4, with the following characteristics:
At least in the hydraulic-tube (18) of the second adjusting cylinder (16), on the side for the turning of the cutting-shield (3), a hydro-mechanic, pressure-controled pressure-testrictor-valve particularly is installed that locks the hydraulic-tube (18), at least of the second hydraulic cylinder (16), when a pre-adjusted pressure of hydraulic-oil is exceeded and opens it again, when pressure is going down, or, by preference, when the pressure of the hydraulic-oil remains under the pre-adjusted value.

6. Device for the discharge of s rolling silo
according to one of the claims 1 to 5, with the following characteristics:
A third electro-hydraulic pilot-valve (23) receives contol-signals from the electronic control (21) for the operation, especially for the switch on and switch off of the appliance of discharge, that is formed as a tipper lorry of the transport- and mixing-tank (2) or formed as an appliance of discharge installed in or mounted on the tank. With it, the switch over of the third electro-hydraulic pilot-valve (23) is always released with the operating panel (22) to the electronic control (21) by a transmitted electric control-signal.

7. Device for the discharge of a rolling silo
according to one of the claims 1 to 6,with the following characteristics:
The cutting-shield (3) of the silo-comb (1), between the sidewalls (6) of the transport- or mixing-tank is pivoting mounted and particularly sealingly guided in the tank for the silage-good and forms in its basic position with the tear-comb (4) or of that kind on its inferior end, set up on the base-plate (14), a seal of the transport- or mixing-tank (2).

8. Device for the discharge of a rolling silo
according to one of the claims 1 to 7, with the following characteristics :
The cutting-shield (3) of the silo-comb (1) is formed vertically divided.
With it, a lower part (35) with the rear-comb (4) is mounted on an upper part (36) and can be turned on a hinged joint around a horizontal turning-axle (37) and, by means of at least one, or by preference two double-acting hydraulic adjusting cylinders (38), distantly arranged, on the side of the cutting-shield (3), turned towards the rolling silo (28), and which are coupled to links (39/39') on the both parts (35 + 36) of the cutting-shield (3) and the lower part (35) is movable, swinging back and forth, lengthwise (13) to the transport-tank.

9. Device for the discharge of a rolling silo
according to one of the claims1 to 7, with the following characteristics:
The lower Part (35) of the cutting-shield (3) is lengthened with levers (43) or like that, over the link of the turning-axle (37) upwards, by preference on the side of the cutting-shield (3), turned towards the rolling silo (28). On them, there is supported a through-camshaft (40), by preference droven by an oil-motor (41), laterally arranged, the cams (42) of which move the lower part (35) of the cutting-shield (3) lengthwise (13) of the transport-tank (2), swinging back and forth. The swinging back happens with the power of at least one tension spring (44).

10. Device for the discharge of a rolling silo
according to one of the claims 7 or 8,with the following characteristics:
At least the one double-acting hydraulic adjusting cylinder (38) or the oil-motor (41) are started automatically when one position of removal of the first and second positioners (11 + 12), programmed in the electronic control (21), is reached, or the programmed oil-pressure is reached, and the switching off takes place automatically, when the process of removal is terminated

11. Device for the discharge of a rolling silo
according to one of the claims 1 to 10, with the following characteristics:
The electronic control (21) programmable with the operating panel (22) is programmable open to change by the input of modified signals, at least for the initial and final positions of the silo-comb (1) and at least for the rise and fall-movements, as well as for the movement of the silo-comb (1) lengthwise (13) of the transport- or mixing-tank (2), in direction towards it, according to the signals of the positioners (11+12).

12. Device for the discharge of a rolling silo
according to one of the claims 1 to 11, with the following characteristics:
The electronic control (21) is programmable open to change for the basic position of the cutting-shield (3) of the silo-comb (1), set up on the base-plate (14) of transport- or mixing-tank (2) with the angle-positions of the first and second electric positioners (11+12) for the position of the lift-arm (8) and the cutting-shield (3).

13. Device for the discharge of a rolling silo
according to one of the claims 1 to 12, with the following characteristics:
The electronic control (21) programmable with the operating panel (22) is programmable open to change for the level of removal (25) of the rolling silo (28) with the silo-comb (1) by its turning to the initial position (26) for the removal of the silage-good by means of the angle-positions of the both positioners (11+12).

14. Device for the discharge of a rolling silo
according to one of the claims 1 to 13,with the following characteristics:
An upper limiting oil-pressure of the first pressure-receiver (24) in the hydraulic-tube (17), on the side for the lowering of the first adjusting cylinder (15), or on an upper limiting tractive force on the electric power-receiver-bolt (31),on one of the links (30/30') of the first adjusting cylinder (15), on the lift-arm (8) or on the framework (29) is programmable open to change, when the lowering of the cutting-shield (3) of the silo-comb (1) is terminated during the removal of the silage-good from the rolling silo (28), and is not restarted before the lowering of the oil-pressure or the lowering of the tractive force, transformed electricly.

15. Device for the discharge of a rolling silo
according to one of the claims 1 to 14, with the following characteristics:
At least the movement of the silo-comb. (1) lengthwise (13) of the transport- or mixing-tank (2) in both directions, is programmable open to change in the electronic control (21) with the operating panel (22), dependent upon the signals of the first pressure-receiver (24), transmitted by the electronic control (21), in the hydraulic-tube (17) on the side for the lowering of the first adjusting cylinder (15) and/or can be particularly controled. Additionally, a preselectable difference of the angle on the second positioner (12) between the lift-arm (8) and the cutting-shield (3) of the silo-comb (1) is programmable open to change for the switch-overs of the second electro-hydraulic pilot-valve (20) for the second adjusting cylinder (16) to turn the cutting-shield (3), which corresponds, by preference, approximately to the thickness of discharge (27) of the silage-good.

16. Device for the discharge of a rolling silo
according to one of the claims 1 to 15,with the following characteristics:
The thickness of discharge (27) of the silage-good from the rolling silo (28) after the leading back of the silo-comb (1) to its initial position (26), for which the angles of the electric positioners (11+12) are already programmed in the electronic control (21), is programmable open to change by a joining angle-difference to the angle of the second positioner (12) between the lift-arm (8) and the cutting-shield (3). According to that angle-difference the cutting-shield (3) of the silo-comb (1) can be adjusted with the adjusting cylinders (15+16) before every process of removal.

17. Device for the discharge of a rolling silo
according to one of the claims 1 to 16, with the following characteristics:
With the operating panel (22) in the electronic control (21) are programmable successive angle-positions of the assigned positioner (11) for a removal step in any height-position of the lift-arm (8) for the lowering of the cutting-shield (3) of the silo-comb (1) to remove the silage-good from the rolling silo (28).

18. Device for the discharge of a rolling silo
according to one of the claims 1 to 17, with the following characteristics:
With the operating panel (22) in the electronic control (21) are programmable successive angle-positions of the both positioners (11+12) to one another, always at a defined angle-position of the first positioner (11) during the lowering of the cutting-shield (3) of the silo-comb (1) for the removal of the silage-good from the rolling silo (28) for an essentially vertical removal step.

19. Device for the discharge of a rolling silo
according to one of the claims 1 to 18, with the follwing characteristics:
The device is programmable in the electronic control (21) with the operating panel (22) for a removal step in successive angle-positions of the assigned positioner (12) in any height-position of the lift-arm (8) for successive turn-positions of the cutting-shield (3) during the removal of the silage-good from the rolling silo (28).

20. Device for the discharge of a rolling silo
accirding to one of the claims 1 to 19, with the following characteristics:
The device is programmable in the electronic control (21) with the operating panel (22) for a removal step in any height-position of the lift-arm (8) with successive angle-positions of the assigned positioner (11) for the height-position of the lift-arm (8), and after the leading back of it to the initial position, which exceeds by preference the height of the silage-stock to be removed from the rolling silo (28), for the turning of the cutting-shield (3) of the silo-comb (1) to remove the silage-good from the rolling silo (28).

21. Device for the discharge of a rolling silo
according to one of the claims 1 to 20, with the following characteristics:
In the electronic control (21) with the operating panel (22) are programmable the position of the lift-arm (8), leaded back upwards, for the turn of the cutting-shield (3), according to that programmed difference of the successive angle-positions of the angle-indicator/positioner (12) assigned to the cutting-shield (3) forward to the initial position for anyone of the next following removal step for the turn of the cutting-shield (3) of the silo-comb (1) to remove the silage-good from the rolling silo (28).

22. Device for the discharge of a rolling silo
according to one of the claims 1 to 21, with the following characteristics:
The diminution of the angle between lift-arm (8) and cutting-shield (3) of the silo-comb (1) is programmable in the electronic control (21) with the operating panel (22) by the input of an angle-difference for the second positioner (12), by preference to the basic position of the silo-comb (1), in which it is set up on the baseplate (14), for the shoveling of the separated silage-good to the transport- or mixing-tank (2), by the execution of the movement lengthwise (13) of the transport- or mixing-tank (2), according to which the second adjusting cylinder (16) is leaded.

23. Device for the discharge of a rolling silo
according to one of the claims 1 to 22, with the following characteristics:
The angle-positions, to one another assigned, of the electric angle-indicators/positioners (11+12) are fixable in the electronic control (21) with the operating panel (22) by programming open to change, where the adjusting cylinders (15+16) are leaded according to the start-order, by preference over the operating panel (22), successive by approach of the first and second pilot-valve (19+20).
With it the individual work-steps are worked off, beginning from the basic position of the silo-comb (1) over its initial position (26) for the removal, up to the shoveling of the removed silage-good to the transport- or mixing-tank (2).

## Revendications

1. Outillage de prélèvement d'un silo roulant
adapté à un container pour transporter et/ou mélanger, surtout à un véhicle pour transporter ou mélanger ou d'un genre similaire, qui présente du moins un fond et des parois latérales et un paroi arrière. Au front ouvert est disposé un peigne de silo dont le panneau tranchant est porté d'un bras d'élévation juste au milieu ou porté de deux bras d'élévation, porté de deux côtés, lequel ou lesquels est/sont articulé(s) sur le panneau tranchant chaque fois, en substance, à une deuxième articulation à l'angle droit, horizontal, au sens de la longueur du container pour transporter et/ou mélanger. A l'autre bout, sur le bâti d'outillage, est/sont monté(s) en particulier au-dessus du container pour transporter et/ou pour mélanger et surtout au domaine de sa partie arrière autour une première articulation orientable/pivotant vers le haut, parallelement adapté à la deuxième articulation du panneau tranchant.
Avec cela, sont articulés entre le bras d'élévation et le bâti d' outillage chaque fois un premier cylindre à ajuster hydraulique, faisant effet double, pour le mouvement d'altitude et, entre le bras d'élévation et le panneau tranchant du peigne de silo chaque fois un deuxième cylindre à a juster hydraulique et faisant effet double pour le mouvement de rotation du panneau tranchant au sens de la longueur du container pour transporter et/ou mélanger ou de ce genre. Ces cylindres à ajuster sont dirigés séparément par une soupape hydraulique pour le mouvement de hauteur et une soupape hydraulique pour le mouvement de rotation. Ceux-ci sont **caractérisés par** un premier ajustage éléctrique (11) sur la première articulation (9) entre le bâti d'outillage (5) et un bras d'élévation (8) pour la position de rotation du/des bras d'élévation, et un deuxième ajustage éléctrique (12) sur la deuxième articulation (10) entre un bras d'élévation (8) et le panneau tranchant (3) pour la position du panneau tranchant (3) dont les ajustage éléctriques (11+12) sont liés à un réglage éléctronique (21). Ce contle émet des signaux de contrôle éléctriques pour manoeuvrer la première soupape éléctro-hydraulique (19) du premier cylindre à ajuster hydraulique (15) pour le mouvement vers le haut du peigne de silo (1), et pour manoeuvrer la deuxième soupape éléctro-hydraulique (20) pour mettre en marche le deuxième cylindre à ajuster hydraulique (16) pour la rotation du peigne de silo (1) au sens de longueur (13) du container pour transporter ou mélanger dont les signaux sont émis l'un après l'autre ou simultanés. Le réglage éléctronique (21) peut être influencé par un pupître de commande (22) rélié éléctriquement. Sur ce pupître de commande (22) sont du moins indiquées les dates essentielles pour le contrôle du peigne de silo (1).

2. Outillage de prélèvement d'un silo roulant
selon l'éxigence 1, caractérisé comme suivant:
Du moins dans le tuyau hydraulique (17) du premier cylindre à ajuster (15) est installé sur le côté pour baisser le bras d'élévation (8) un premier recepteur de pression (24) qui rend la pression d'huile recue, transformée en signaux éléctriques, au contrôle éléctronique (21). Alternativement, un boulon d'un recepteur de force éléctrique (31) est installé du moins à une des articulation (30 ou 30') du moins du premier cylindre à ajuster (15) au bras d'élévation (8) ou au bâti d'outillage (29). Celui-ci (31) rend la traction recue, transformée en signaux éléctriques, au réglage éléctronique (21).

3. Outillage de prélèvement d'un silo roulant
selon l'éxigence 1, caractérisé comme suivant:
Du moins dans le tuyau hydraulique (17) du premier cylindre à ajuster (15), sur le côté pour baisser le bras d'élévation (8) est installée surtout une soupape pour la limitation de pression hydro-mécanique et pression-contrôllé, qui ferme du moins le tuyau hydraulique (17) du premier cylindre hydraulique (15) si la pression de l'huile hydraulique préreglée est dépassée, Elle s'ouvre de nouveau au cas que la pression reste inférieure ou, de préférence, si la pression est descendue au-dessous d'une valeur préreglée.

4. Outillage de prélèvement d'un silo roulant
selon une des exigences 1 ou 2, caractérisé comme suivant:
Du moins dans le tuyau hydraulique (18) du deuxième cylindre à ajuster (16), sur le côté pour la rotation du panneau tranchant (2) du peigne de silo (1), vers le container pour transporter ou mélanger (2), un deuxième récepteur de pression est installé qui rend la pression d'huile recue, transformée en signaux éléctriques, au réglage éléctronique (21).
Alternativement, un deuxième boulon d'un recepteur de pression éléctrique (31) à un des articulations (32/32') du deuxième cylindre à ajuster (16) est installé au bras d'élévation (8) ou au panneau tranchant (2). Celui-ci rend la traction recue, transormée en signaux éléctriques, au réglage éléctronique (21).

5. Outillage de prélèvement d'un silo roulant
selon une des exigences 1 à 4, caractérisé comme suivant:
Du moins dans le tuyau hydraulique (18) du deuxième cylindre à ajuster (16), sur le côté pour la rotation du panneau tranchant (3), une soupape pour la limitation de pression, avant tout hydromécanique, pression-controllée, est installée qui ferme le tuyau hydraulique (16), si la pression d'huile hydraulique préreglée est dépassée. Elle s'ouvre de nouveau aussitôt que la pression est descendue au-dessous de la pression normale ou mieux de la pression d'huile hydraulique préreglée.

6. Outillage de prélèvement d'un silo roulant
selon une des exigences 1 à 5, caractérisé comme suivant :
Une troisième soupape éléctro-hydraulique (23) recoit des signaux de contrôle du réglage éléctronique (21) surtout pour manoeuvrer la mise en marche et l'arrêt d'un dispositif pour décharger.
Ce mécanisme est formé comme basculeur du container pour transporter et mélanger (2) ou formé comme installation de rejet installée dans ou monté au container pour transporter et mêlenger (2).
La troisième soupape éléctro-hydraulique (23) déclenche un signal éléctrique du pupitre de commande (22) au contrôle éléctronique (21).

7. Outillage de prélèvement d'un silo roulant
selon une des exigences 1 à 6, caractérisé comme suivant:
Le panneau tranchant (3) du peigne de silo (1), entre les parois latérales (=6) du container pour transporter ou mélanger (2) et, en substance, il est guidé rendu étanche et imperméable pour le sillage. Il forme dans sa position normale, avec le peigne à décrocher (4) ou de ce genre, à son bout inférieur sur la plaque du fond (14), une fermeture du container pour transporter ou mélanger (2).

8. Outillage de prélèvement d'un silo roulant
selon une des exigences 1 à 7, caractérisé comme suivant:
Le panneau tranchant (3) du peigne de silo (1) est formé divisé verticalement. Avec cela, une partie inférieure (35) est montée, avec le peigne à déctocher (4) à une partie supérieure (36) autour une articulation horizontale (37), pivotant en charnières. Au moins un ou encore mieux deux cylindres à ajuster hydrauliques, faisant effet double (38), à distance, est/sont rangé(s) au côté du panneau tranchant (3) tourné(s) vers le silo roulant (28) et des articulations (39/39') sont articulées aux deux parties (35+36) du panneau tranchant (3) et la partie inférieure est mobile, pivotant aller et retour, au sens de longueur (13) du container pour transporter (2).

9. Outillage de prélévement d'un silo roulant
selon une des exigences 1 à 7, caractérisé comme suivant:
La partie inférieure (35) du panneau tranchant (3) est prolongée vers le haut, liée à l'articulation (37), de préférence avec des leviers (43) ou de ce genre au côté du panneau tranchant (3),tournée vers le silo roulant (28). Sur les leviers (43) est monté un arbre à cames ininterrompu (40), entraîné de préférence d'un moteur d'huile (41) rangé latéralement dont les cames (42) meuvent la partie inférieure (35) du panneau tranchant (3) au sens de longueur (13) du container pour transporter (2) aller et retour. Le mouvement de retour se produit sous la puissance au moins d'un ressort.

10. Outillage de prélèvement d'un silo roulant
selon une des exigences 7 ou 8 ; caractérisé comme suivant:
Du moins un cylindre à ajuster hydraulique faisant effet double (38) ou le moteur à l'huile (41) est automatiquement mis en oeuvre après qu'il a obtenu une position d'aplanissement programmée au réglage éléctronique du premier et deuxième ajustage (11+12) ou après que la pression de l'huile programmée est atteinte, et sont arrêtés de nouveau automatiquement à la fin du processus d'aplanissement.

11. Outillage de prélèvement d'un silo roulant
selon une des exigences 1 à 10, caractérisé comme suivant:
Le réglage éléctronique (21) programmable au pupître de commande (22) est au moins programmable par l'entrée des signaux modifiés du moins pour les positions de départ et finales du peigne de silo (1) et du moins pour les mouvements ascendants et descendants et pour le mouvement du peigne de silo (1) au sens de longueur (13) du container pour transporter ou mélanger (2), vers le container, selon les signaux des ajustages (11+12).

12. Outillage de prélèvement d'un silo roulant
selon une des exigences 1 à 11, caractérisé comme suivant:
Le réglage éléctronique (21) est modifiablement programmable pour la position normale du panneau tranchant (3) du peigne de silo (1), mis sur le plaque du fond (14) du container pour transporter ou mélanger (2), avec les positions d'angles du premier et deuxième ajustage éléctrique (11+12) pour la position du bras d'élévation (8) et du panneau tranchant (3).

13. Outillage de prélèvement d'un silo roulant
selon une des exigences 1 à 12, caractérisé comme suivant:
Le réglage éléctronique (21) programmable au pupitre de commande (22) est modifiablement programmable pour la hauteur d'aplanissement (25) du silo roulant (28) avec le peigne de silo (1) en le pivotant à la position initiale (26) pour déblayer le sillage sur les positions d'angles des deux ajustages (11+12).

14. Outillage de prélèvement d'un silo roulant
selon une des exigences 1 à 13, caractérisé comme suivant:
Une pression d'huile délimitante vers le haut du premier recepteur de pression (24) dans le tuyau hydraulique (17) sur le côté pour baisser le premier cylindre à ajuster (15) ou une traction supérieure délimitante au boulon d'un recepteur de force (31) éléctrique à une des articulations (30/30') du premier cylindre à ajuster (15) au bras d'élévation (8) ou au bâti d'outillage (29) est modifiablement programmable ou l'abaissement du panneau tranchant (3) du peigne de silo (1) est terminé à l'aplanissement du sillage du silo roulant (28) et ne recommence qu' après la baisse de la pression d'huile ou après la baisse de la traction, transformée éléctriquement.

15. Outillage de prélèvement d'un silo roulant
selon une des exigences 1 à 14, caractérisé comme suivant:
Au moins le mouvement du peigne de silo (1) au sens de longueur (13) du container pour transporter ou mélanger (2) en deux directions, est modifiablement programmable et surtout réglable du pupître de commande (22) au réglage éléctronique (21) dépendant d'un signal du premier recepteur de pression (24) dans le tuyau hydraulique (17) sur le côté d'abaissement du premier cylindre à ajuster (15) et, additionnellement, une différence de l'angle préselectable est modifiablement programmable au deuxième ajustage (12) entre le bras d'élévation et le panneau tranchant (3) du peigne de silo (1) pour renverser la marche de la deuxième soupape éléctro-hydraulique (20) pour le deuxième cylindre à ajuster (16) à faire pivoter le panneau tranchant (3). Cette différence de l'angle correspond,de préférence, à peu près à l'épaisseur d'aplanissement (27) du sillage.

16. Outillage de prélèvement d'un silo roulant
selon une des exigences 1 à 15, caractérisé comme suivant:
L'épaisseur d'aplanissement (27) du sillage au silo roulant (28) est modifiablement programmable avec le pupitre de commande (22) au réglage éléctronique (21) après que le peigne de silo (1) est rentré à la position initiale (26) dont les angles des ajustages éléctriques (11+12) sont déjà mémorisés au réglage éléctronique (21) par une différence de l'angle ajoutée à l'angle du deuxième ajustage (12) entre le bras d'élévation (8) et le panneau tranchant (3).
Selon cette différence le panneau tranchant (3) du peigne de silo (1) est réglable avec les cylindres à ajuster (15+16) avant chaque processus d'aplanissement.

17. Outillage de prélèvement d'un silo roulant
selon une des exigences 1 à 16, caractérisé comme suivant:
Des positions d'angles consécutives de l'ajustage classé (11) sont programmables avec le pupitre de commande (22) au réglage éléctronique pour une démarche d'aplanissement, à une position d'altitude quelconque du bras d'élévation (8) pour l'abaissement du panneau tranchant (3) du peigne de silo (1) à aplanir le sillage du silo roulant (28).

18. Outillage de prélèvement d'un silo roulant
selon une des exigences 1 à 17, caractérisé comme suivant:
Des positions d'angles consécutives des deux ajustages (11+12), l'une à l'autre, sont programmables avec le pupître de commande (22) au réglage éléctronique (21), chaque fois à une position définie de l'angle du premier ajustage (11) pendant l'abaissement du panneau tranchant (3) du peigne de silo (1) pour aplanir le sillage du silo roulant (28), pour une démarche d'aplanissement, en substance verttical.

19. Outillage de prélèvement d'un silo roulant
selon une des exigences 1 à 18, caractérisé comme suivant:
Des positions d'angles consécutives de l'ajustage (12) classé pour une démarche d'aplanissement à une position d'altitude queoconque du bras d'élévation (8), pour des positions de rotation consécutives du panneau tranchant (3) pendant l'aplanissement du sillage au silo roulant (28) sont programmables avec le pupître de commande (22) au réglage éléctronique (21).

20. Outillage de prélèvement d'un silo roulant
selon une des exigences 1 à 19, caractérisé comme suivant:
Des positions d'angles consécutives de l'ajustage (11) sont programmables avec le pupitre de commande (22) au réglage éléctronique (21) pour une démarche d'aplanissement à une position d'altitude quelconque du bras d'élévation (8), pour la position d'altitude du bras d'élévation (8), et, après son retour à la position initiale, qui dépasse de préférence la hauteur du stock de sillage au silo roulant (28), pour la rotation du panneau tranchant (3) du peigne de silo (1) à aplanir le sillage du silo roulant (28).

21. Outillage de prélèvement d'un silo roulant
selon une des exigences 1 à 20, caractérisé comme suivant:
Avec le pupître de commande (22) au réglage éléctronique (21) sont programmables dans la position retirées en haut du bras d'élévation (8), la rotation du panneau tranchant (3) selon la différence programmée des positions d'angles consécutives de l' angle-indicateur/ajustage classé (12) au panneau tranchant (3) en avant, à la position initiale pour une prochaine démarche d'aplanissement, suivant quelconque, pour la rotation du panneau tranchant (3) du peigne de silo (1) à aplanir le sillage du silo roulant (28).

22. Outillage de prélèvement d'un silo roulant
selon une des exigences 1 à 21, caractérisé comme suivant:
Programmable est avec le pupître de commande (22) au réglage éléctronique (21) la diminution de l'angle entre le bras d'élévation (8) et le panneau tranchant (3) du peigne de silo (1) pour exécuter le mouvement au sens de longueur (13) du container pour transporter ou mélanger (2) selon laquelle le deuxième cylindre à ajuster (16) est réglée par l'entrée d'und différence de l'angle pour le deuxième ajustage (12), de préférence à la position normale du peigne de silo (1) ou celui est posé sur le plaque de fond (14), pour pelleter le sillage séparé dans le container pour transporter ou mélanger (2).

23. Outillage de prélèvement d'un silo roulant
selon une des exigences 1 à 22, caractérisé comme suivant:
Avec le pupître de commande (22) au réglage éléctronique (21) les positions d'angles, classées l'une à l'autre des angles-indicateurs/des ajustages éléctriques (11+12) sont fixables par une programmation modifiable, dans lesquelles les cylindres à ajuster (15+16) sont réglés selon l'instruction 'mettre en marche', de préférence sur le pupître de commande (22), l'un à l'autre, en dirigeant la première et la deuxième soupape (19+20).
Avec cela, les étapes individuelles sont réalisées, commencant de la position normale du peigne de silo (1), sur sa position de départ (26) pour aplanir et pelleter le sillage déblayé dans le container pour transporter ou mélanger (2).
